# EUROPEAN PATENT SPECIFICATION

(11) **EP 0 292 264 B1**
(45) Date of publication and mention of the grant of the patent: **31.08.1994**
(21) Application number: 88304503.1
(22) Date of filing: 18.05.1988
(51) Int. Cl.: C08L 23/10, C08K 3/00, C08L 23/30

(54) **Reinforced thermoplastic resin composition**
Verstärkte thermoplastische Kunststoffzusammensetzung
Composition à base de résine thermoplastique renforcée

(30) Priority: 22.05.1987 JP 125522/87
(43) Date of publication of application: 23.11.1988
(73) Proprietor: MITSUI PETROCHEMICAL INDUSTRIES, LTD., Tokyo 100 (JP)
(72) Inventor: Itoi, Hideyuki, Saeki-gun Hiroshima (JP)
(74) Representative: Cresswell, Thomas Anthony

(56) References cited:
- EP-A- 0 199 659
- EP-A- 0 212 142
- EP-A- 0 265 527
- GB-A- 2 143 831
- US-A- 3 822 227
- US-A- 4 317 765
- US-A- 4 436 863

## Description

The present invention relates a reinforced thermoplastic resin composition and to a shaped article made of such a composition.

Recently, plastics materials having light weight compared to metals and having excellent moldability and processability have been used as, for example, automobile parts, from the viewpoint of material or resource saving and energy saving. Such automobile parts produced from plastics materials include a wide variety of parts such as, for example, outer plate materials such as fenders and door panels, bumpers and tire wheels.

The properties required of the plastics vary largely depending upon the intended use. For example, of the automobile parts, automobile outer plate materials, bumpers and tire wheels require plastics materials having excellent mechanical strength, such as excellent impact strength.

Under the above-mentioned circumstances, olefin polymer compositions comprising, for example, olefin polymers, inorganic bulk fillers, and polyolefins having a carboxylic anhydride group therein have been proposed as plastics having an impact resistance in, for example, JP-A-48-97947. However, these olefin polymer compositions are still unsatisfactory in that they do not meet the impact resistance requirements for automobile outer plate materials, bumpers and tire wheels, and that their flowability is not sufficient when molding and processing the automobile parts. These problems also exist in other plastics.

US-A-3,822,227 discloses a homogeneous polyamide/olefin polymer mixture comprising a polyamide, a polyolefin and an oxidised wax. US-A-4,436,683 discloses a talc filled polypropylene composition containing 0.1 to 10 per cent of a processing aid which is a low molecular weight ethylene-vinyl acetate copolymer or a low molecular weight oxidized high density polyethylene. EP-A-199659 describes a polypropylene resin containing calcium carbonate in an amount less than 50% by weight and 0.5 to 5% of polyethylene oxide wax based on the weight of the resin.

The present invention aims to eliminate the above-mentioned problems of the prior art and to provide a reinforced thermoplastic resin composition having an impact strength sufficient to satisfy the required properties when used as, for example, automobile outer plate materials, bumpers, and tire wheels, and having excellent flowability during molding and processing.

Accordingly, the present invention provides a reinforced thermoplastic resin composition comprising:
(A) 100 parts by weight of propylene polymer;
(B) 5 to 60 parts by weight of an at least partially graft-modified random copolymer of ethylene and a C₃ to C₁₈ α-olefin, the copolymer having a graft amount of an unsaturated carboxylic acid or a derivative thereof of 0.01% to 10% by weight, a degree of crystallinity according to an X-ray determination of 0 to 45%, and an ethylene content of 30 to 93 mol%;
(C) 5 to 150 parts by weight of an inorganic powdery filler; and
(D) 0.1 to 15 parts by weight of an oxidized polyolefin wax having an oxygen content of 0.1 to 11% by weight.

The invention also provides a reinforced thermoplastic resin composition comprising:
(A') 100 parts by weight of a mixture of (a) 5% to 95% by weight of propylene polymer (A) and (b) 95% to 5% by weight of polyamide (E);
(B) 5 to 60 parts by weight of an at least partially graft-modified random copolymer of ethylene and a C₃ to C₁₈ α-olefin, the copolymer having a graft amount of an unsaturated carboxylic acid or a derivative thereof of 0.01% to 10% by weight, a degree of crystallinity according to an X-ray determination of 0 to 45%, and an ethylene content of 30 to 93 mol%;
(C) 5 to 150 parts by weight of an inorganic powdery filler; and
(D) 0.1 to 15 parts by weight of an oxidized polyolefin wax having an oxygen content of 0.1 to 11% by weight.

The reinforced thermoplastic resin composition according to the present invention will now be explained in detail.

### Propylene Polymer (A)

The propylene polymers (A) usable in the present invention are those preferably having a melt flow rate (MFR) of 0.01 to 70 g/10 min, more preferably 0.1 to 50 g/10 min, determined by the method according to ASTM-D-1238L. Examples of such propylene polymers (A) are [1] propylene homopolymers or block or random copolymers of propylene and 50 mol% or less of α-olefins such as ethylene, 1-butene, and 4-methyl-1-pentene, and [2] graft modified propylene homopolymers or copolymers obtained by partially or entirely graft modifying the above-mentioned homopolymers or copolymers with 0.001 to 10% by weight, preferably 0.1 to 5% by weight, of a graft monomer, i.e., an unsaturated carboxylic acid or derivatives thereof. These propylene polymers may be used alone (e.g., [1] or [2] alone) or in any mixture thereof (e.g., a mixture of [1] and [2]).

The MFR of the propylene polymer (A) is preferably 0.01 to 70 g/10 min, more preferably 0.1 to 50 g/10 min, to provide a good flowability and moldability as well as a good mechanical strength such as impact resistance.

Examples of the above-mentioned modifiers, i.e., the unsaturated carboxylic acids or derivatives thereof include unsaturated carboxylic acids such as acrylic acid, maleic acid, fumaric acid, tetrahydrophthalic acid, itaconic acid, citraconic acid, crotonic acid, isocrotonic acid and Nadic acid® (i.e., endocis-bicyclo-(2,2,1)-hepto-5-ene-2,3-dicarboxylic acid) and acid halides, amides, imides, anhydrides, and esters such as malenyl chloride, maleimide, maleic anhydride, citraconic anhydride, monomethyl maleate, dimethyl maleate, and glycidyl maleate. Of these compounds, unsaturated dicarboxylic acids or their anhydrides, especially maleic acid and Nadic acid® or anhydrides thereof are preferably used. Especially when the propylene polymer and polyamide are blended, the impact resistance of the molded product is remarkably improved.

Furthermore, for example, a mixture of [1] the above-mentioned unmodified propylene homopolymer or block or random copolymer of propylene and α-olefin and the above-mentioned modified propylene polymer [2] partially or entirely modified with the unsaturated carboxylic acid or the derivative thereof is preferably used at a ratio of [1]/[2] of 99.5/0.5 to 1/99, preferably 99/1 to 60/40.

### Modified Ethylene Copolymer (B)

The modified ethylene copolymers (B) usable in the present invention are graft-modified copolymers obtained by partially or entirely modifying ethylene-α-olefin random copolymer (b') having a degree of crystallinity according to an X-ray determination of 0 to 45%, preferably 0 to 40%, more preferably 0 to 30% and an ethylene content of 30 to 93 mol%, preferably 40 to 91 mol%, with 0.01 to 10% by weight, preferably 0.1 to 5% by weight of a graft monomer selected from unsaturated carboxylic acids or derivatives thereof. The use of the ethylene-α-olefin random copolymer (b') having a degree of crystallinity of 45% or less and an ethylene content of 93 mol% or less is preferable, in the light of the present invention's object of obtaining molded products having improved impact resistance. Furthermore, the melt flow rate (MFR) of the ethylene-α-olefin random copolymers is (b') preferably 0.01 to 20 g/10 min, more preferably 0.05 to 10 g/min. When the MFR of the ethylene-α-olefin random copolymers is within the above-mentioned range, the difference in the melt viscosity between the modified ethylene copolymer (B) obtained therefrom and the above-mentioned propylene polymer (A) tends to decrease and, therefore, the dispersibility of each component becomes good and the impact resistance of the molded product is remarkably improved.

The copolymerizing components of the unmodified ethylene-α-olefin random copolymers (b') are α-olefins having 3 to 18 carbon atoms. Examples of such α-olefins are propylene, 1-butene, 1-hexene, 4-methyl-1-pentene, and 1-decene. These α-olefins may be used alone or in any combination thereof. Furthermore, although the ethylene-α-olefin random copolymers usually comprise an ethylene component and an α-olefin component, optionally they may contain a trace amount, e.g., 0.5 mol% or less, of a diene component. Furthermore, the unmodified ethylene-α-olefin copolymer (b') preferably has a melt index of 0.01 to 20 g/10 min, especially 0.05 to 10 g/10 min and a density of 0.870 to 0.900 g/cm², especially 0.875 to 0.895 g/cm².

In the present invention, the modified ethylene copolymers (B) preferably have a degree of crystallinity according to an X-ray determination of 0 to 45%, more preferably 0 to 40%, especially preferably 0 to 30%, an ethylene content of 30 to 93 mol%, especially 40 to 91 mol%, and a graft amount of an unsaturated carboxylic acid or a derivative thereof of 0.01% to 10% by weight.

The modifiers, i.e., unsaturated carboxylic acids or derivatives thereof usable in the production of the modified ethylene copolymers (B) are the same as mentioned in the propylene polymers (A).

The modified ethylene copolymer (B) obtained by graft copolymerizing the graft copolymer selected from the unsaturated carboxylic acids and the derivatives thereof onto the ethylene-α-olefin random copolymers may be produced according to any known various methods. For example, the above-mentioned ethylene-α-olefin random copolymer is melted, followed by adding thereto the graft monomer to effect the graft copolymerization, or the ethylene-α-olefin random copolymer is dissolved in a solvent, followed by adding thereto the graft monomer to effect the graft copolymerization, or the like. In each case, the graft reaction is preferably carried out in the presence of a radical initiator to effectively graft copolymerize the above-mentioned graft monomers. The graft reaction is usually carried out at a temperature of 60°C to 360°C. Although there are no critical limitations to the amount of the radical initiator, the radical initiator is generally used in an amount of 0.001 to 1 part by weight, based on 100 parts by weight of the ethylene-α-olefin random copolymer. Examples of such radical initiators are organic peroxides and organic peresters such as, for example, benzoyl peroxide, dichlorobenzoyl peroxide, dicumyl peroxide, di-tert-butyl peroxide, 2,3-dimethyl-2,5-di(peroxide benzoate) hexine-3, 1,4-bis(tert-butylperoxy isopropyl) benzene, lauroyl peroxide, tert-butyl peracetate, 2,5-dimethyl-2,5-di(tert-butylperoxy) hexine-3, 2,5-dimethyl-2,5-di(tert-butylperoxy) hexane, tert-butyl perbenzoate, tert-butylperphenyl acetate, tert-butyl perisobutyrate, tert-butyl perpivalate, cumyl perpivalate, and tert-butyl perdiethylacetate, and azo compounds such as azobisisobutyronitrile and dimethyl azoisobutylate. Of these radical initiators, the use of dialkyl peroxide such as dicumyl peroxide, di-tert-butyl peroxide, 2,5-dimethyl-2,5-di(tert-butylperoxy) hexine-3, 2,5-dimethyl-2,5-di(tert-butylperoxy) hexane, and 1,4-bis(tert-butylperoxyisopropyl) benzene.

The above-mentioned modified ethylene copolymer (B) is used in an amount of 5 to 60 parts by weight, based on 100 parts by weight of the above-mentioned component (A) or 100 parts by weight of a mixture of the component (A) and the below-mentioned polyamide (E), from the view point of impact strength, heat resistance, and flexural modulus.

Furthermore, according to the present invention, 0 to 200 parts by weight, preferably 5 to 100 parts by weight, based on 100 parts by weight of (i) the component (A) or (ii) a mixture of the component (A) and the component (E), of an unmodified ethylene-α-olefin random copolymer (B') having a degree of crystallinity according to an X-ray determination of 0 to 45%, preferably 0 to 40%, more preferably 0 to 30% and an ethylene content of 30 to 93 mol%, preferably 40 to 91 mol% is preferably used, in addition to the component (B). When the component (B') is used in the above-mentioned range, the properties, for example the flowability, of the molded products are further improved.

### Inorganic Powdery Filler (C)

The inorganic powdery fillers (C) usable in the present invention include, for example, silicates such as talc, clay, bentonite, and attapulgite; oxides such as iron oxide, alumina, magnesium oxide, and calcium oxide; hydrated metal oxides such as aluminum hydroxide, magnesium hydroxide, basic magnesium carbonate, calcium hydroxide, tin oxide hydrate, and zirconium oxide hydrate; carbonates such as calcium carbonate and magnesium carbonate; borates such as barium borate and zinc borate; phosphates such as aluminum phosphate and sodium tripolyphosphate; sulfates such as gypsum and sulfites; and any mixture thereof. Of these fillers, the use of talc is preferable. To obtain molded products having a good impact resistance, preferably the talc has an average diameter of 5.0 µm or less, especially 0.5 to 3 µm.

The inorganic powdery filler (C) is used in an amount of 5 to 150 parts by weight, more preferably 5 to 100 parts by weight, most preferably 10 to 80 parts by weight, based on 100 parts by weight of the component (A) or the mixture of the components (A) and (E) to obtain the desired molded product having good elasticity modulus and good impact resistance.

### Oxidized Polyolefin Wax (D)

The oxidized polyolefin waxes (D) usable in the present invention are those having an oxygen content of 0.1 to 11% by weight, preferably 0.2 to 8% by weight. The amount of the oxidized polyolefin wax (D) is 0.1 to 15 parts by weight, preferably 0.5 to 10 parts by weight, based on 100 parts by weight of the component (A) or a mixture of the components (A) and (E).

When the oxygen content of the oxidized polyolefin wax (D) is within the range of 0.1 to 11% by weight, the dispersibility of each component is remarkably improved and, therefore, the impact resistance of the molded product is improved, the weathering resistance of the molded product is good, no substantial coloring occurs, and the mechanical strength is excellent. Furthermore, when the amount of the oxidized polyolefin wax added is within the range of 0.1 to 15 parts by weight, a molded product having excellent impact resistance and good strength can be obtained.

The oxidized polyolefin wax (D) can be mainly obtained by oxidizing polyolefin wax. The oxidation method may be any conventional oxidation method. The polyolefin waxes include homopolymers of α-olefins such as ethylene, propylene, 1-butene, 1-hexene, 4-methyl-1-pentene, and 1-decene, or copolymers of two or more α-olefins. Of these polyolefins, the use of polyolefin wax containing, as a major component, ethylene is preferable.

The oxidized polyolefin waxes (D) usable in the present invention preferably have an intrinsic viscosity of 0.04 to 0.5 dl/g, more preferably, 0.05 to 0.4 dl/g, determined at 135°C in a decaline solvent.

The oxygen included in the oxidized polyolefin wax is present in the state of a hydroxyl group, a carbohyl group such as an aldehyde or ketone, a carboxyl group or an ester.

### Polyamide (E)

The polyamides (E) optionally usable in the present invention include polyamides obtained from polycondensation of, for example, aliphatic, alicyclic, and aromatic diamines such as hexamethylene diamine, decamethylene diamine, dodecamethylene diamine, 2,2,4- or 2,4,4-trimethylhexamethylene diamine, 1,3- or 1,4-bis(aminomethyl) cyclohexane, m- or p-xylylenediamine and aliphatic, alicyclic, and aromatic dicarboxylic acids such as adipic acid, suberic acid, sebacic acid, cyclohexane dicarboxylic acid, terephthalic acid, and isophthalic acid. Furthermore, polyamides obtained from condensation of aminocarboxylic acid such as ε-aminocaproic acid and 11-aminoundecanoic acid, polyamides obtained from lactams such as ε-caprolactam and ω-laurolactam, or copolyamides obtained from these components. These polyamides may be used alone or in any mixture thereof.

Specifically, nylon 6, nylon 66, nylon 610, nylon 9, nylon 11, nylon 12, nylon 6/66, nylon 66/610, and nylon 6/11 are preferably used. Especially, the use of nylon 6 and nylon 66 is preferable from the viewpoint of stiffness and heat resistance.

Although there are no critical limitations to the molecular weight of the polyamides, the use of a polyamide having a relative viscosity ηᵣ of 1.0 or more, especially 2.0 or more, determined in 98% sulfuric acid according to a JIS X6810 is preferable from the viewpoint of obtaining an excellent mechanical strength.

The polyamide (E) is used in an amount of 95% to 5% by weight, more preferably 80% to 10% by weight, based on the total amount of the above-mentioned components (A) and (E). When the amount of the polyamide (E) is contained within the range of 5% to 95% by weight, the mechanical strength of the molded article is further improved and the variations or changes of the strength and dimension due to water absorption are advantageously small. Accordingly, the use of the polyamide component (E) within the above-mentioned range is preferable in the present invention.

As mentioned above, when the polyamide (E) is used as a blend thereof with the above-mentioned modified propylene polymer, the impact resistance of the molded product is remarkably improved.

### Production Method

The reinforced thermoplastic resin composition can be produced by mixing the propylene polymer (A), the modified ethylene copolymer (B), the inorganic powdery filler (C), and the oxidized polyolefin wax and, optionally, the polyamide (E) in the above-mentioned amount range in, for example, a Henschel mixer, v-blender, ribbon blender, or tumbler blender, followed by melt mixing or kneading in a single screw type extruder, multiple screw extruder, kneader, or Banbury mixer. Among these, if an apparatus having an excellent kneading performance such as a multiple screw extruder, kneader, or Banbury mixer is used, the reinforced thermoplastic resin composition containing each component uniformly dispersed therein and having a high quality in the form of a granulated powder can be advantageously obtained.

When the granulated reinforced thermoplastic resin composition according to the present invention is subjected to injection molding or rotational molding by using, for example, a single screw extruder, vent type extruder, dual screw extruder, conical type dual screw extruder, co-kneader, platificator, mixtruder, twin-conical screw extruder, planetary worm extruder, gear type extruder, or screw-less extruder, the automobile outer plate materials such as fenders and door panels, bumpers, and tire wheels can be advantageously obtained.

Furthermore, the reinforced thermoplastic resin composition may optionally include various conventional additives such as antioxidants, UV absorbers, lubricants, nucleating agents, anti-static agents, flame retarders pigments, and dyes, depending upon the intended use, provided that the properties of the present composition are not adversely affected. These additives may be added in any step of the mixing or kneading process.

As mentioned above, since the reinforced thermoplastic resin composition according to the present invention comprises the above-mentioned propylene polymer (A), modified ethylene copolymer (B), and the inorganic powdery filler (C) or, the polyamide (E) in addition to the components (A), (B), and (C), and since the oxidized polyolefin wax (D) is used as an improver of impact resistance and resin flowability, the above-mentioned automobile parts (e.g., automobile outer plate materials such as fenders and door panels, bumpers, and tire wheels, molded therefrom have an excellent impact resistance). Furthermore, the present composition exhibits a good flowability and is easily molded and processed.

### EXAMPLES

The present invention will now be further illustrated by, but is by no means limited to the following Examples, wherein all parts and percents indicate parts by weight and % by weight.

### Example 1

(i) (A) Propylene Polymer (trade name : Hipol X-440, melt flow rate: 3 g/10 min, manufactured by Mitsui Petrochemical Industries Ltd.): 15%,
(ii) (A) Maleic anhydride graft modified propylene polymer (intrinsic viscosity η : 0.4 dl/g and grafted amount of maleic anhydride: 3.0%): 1%,
(iii) (E) Polyamide (Ny-6A-1022HR manufactured by Yunichika K.K.): 84%, and, based upon 100 parts by weight of the components (i), (ii), and (iii),
(iv) (B) Modified ethylene propylene random copolymer (ethylene content: 81 mol%, degree of crystallinity according to X-ray: 3%, grafted amount of maleic anhydride: 1%): 40 parts,
(v) (C) Talc (Hifiller-15Ds manufactured by Matsumura Sangyo, average particle size: 2 µm): 60 parts, and
(vi) (D) Oxidized polyethylene wax (oxygen content: 0.5%, intrinsic viscosity η : 0.13 dl/g): 2 parts

The above-mentioned components (i) to (vi) were mixed together, and after stirring the mixture in a tumbler mixer, the mixture was granulated by a 45 mm⌀ twin-screw extruder.

From the resultant pellets, the test specimens were injection molded, and the flexural modulus, the dart impact strength, and the spiral flow length were determined.

The results are as follows:

| | |
|---|---|
| Flexural modulus: | 20,000 kg/cm² |
| Dart impact strength (-30°C): | 330 kg·cm |
| Spiral flow length: | 60 cm |

### Example 2

(i) (A) Propylene polymer (trade name: Hipol X-20 manufactured by Mitsui Petrochemical Industries Ltd., melt flow rate: 10 g/10 min): 21%,
(ii) (E) Polyamide (Ny-6A-1022HR manufactured by Yunichika K.K.): 79%, and based upon 100 parts by weight of the components (i) and (ii),
(iii) (B) Modified ethylene propylene random copolymer used in Example 1: 13 parts,
(iv) (C) Talc used in Example 1: 38 parts, and
(v) (D) Oxidized polyethylene wax used in Example 1: 2 parts

The components (i) to (v) were mixed together, and after mixing the mixture in a tumbler mixer, the mixture was granulated by a 45 mm⌀ twin-screw extruder.

The resultant pellets were injection molded to obtain the test specimen, and the flexural modulus, the dart impact strength, and the spiral flow length were determined.

The results are as follows.

| | |
|---|---|
| Flexural modulus: | 21,000 kg/cm² |
| Dart impact strength (-30°C): | 340 kg·cm |
| Spiral flow length: | 72 cm |

### Comparative Example 1

The test specimen were prepared in the same manner as in Example 1, except that the oxidized polyethylene wax was not added.

The flexural modulus, the dart impact strength, and the spiral flow length were determined. The results are as follows.

| | |
|---|---|
| Flexural modulus: | 20,000 kg/cm² |
| Dart impact strength (-30°C): | 100 kg·cm |
| Spiral flow length: | 50 cm |

### Comparative Example 2

The test specimen were prepared in the same manner as in Example 2, except that the oxidized polyethylene wax was not used.

The flexural modulus, the dart impact strength, and the spiral flow length were determined. The results are as follows.

| | |
|---|---|
| Flexural modulus: | 20,500 kg/cm² |
| Dart impact strength (-30°C): | 250 kg·cm |
| Spiral flow length: | 55 cm |

### Comparative Example 3

The test specimen was prepared in the same manner as in Example 1, except that polyethylene wax having an oxygen content of 0% and an intrinsic viscosity [η] of 0.14 dl/g was used in place of the oxidized polyethylene wax used in Example 1.

The flexural modulus, the dart impact strength, and the spiral flow length were determined. The results are as follows.

| | |
|---|---|
| Flexural modulus: | 20,000 kg/cm² |
| Dart impact strength (-30°C): | 120 kg·cm |
| Spiral flow length: | 62 cm |

From the above-mentioned results in the Examples and Comparative Examples, it is clear that the molded products of the thermoplastic resin composition according to the present invention have an excellent impact resistance (dart impact strength) and that the flowability (spiral flow length) of the thermoplastic resin composition according to the present during the molding is also excellent.

### Example 3

(i) (A) Propylene Polymer (trade name: Hipol X-440, melt flow rate: 3 g/10 min, manufactured by Mitsui petrochemical Industries Ltd.): 15%,
(ii) (A) Maleic anhydride graft modified propylene polymer (intrinsic viscosity η : 0.4 dl/g and grafted amount of maleic anhydride: 3.0%): 1%,
(iii) (E) Polyamide (Ny-6A-1022HR manufactured by Yunichika K.K.): 84%, and, based upon 100 parts by weight of the components (i), (ii), and (iii),
(iv) (B) Modified ethylene propylene random copolymer (ethylene content: 81 mol%, degree of crystallinity according to X-ray: 3%, grafted amount of maleic anhydride: 1%): 40 parts,
(v) (B') Ethylene Propylene Random Copolymer (ethylene content: 81 mol%, degree of crystallinity according to X-ray: 3%): 10 parts,
(vi) (C) Talc (Hifiller-15DS manufactured by Matsumura Sangyo, average particle size: 2 µm): 60 parts, and
(vii) (D) Oxidized polyethylene wax (oxygen content: 0.5%, intrinsic viscosity η : 0.13 dl/g): 2 parts

The above-mentioned components (i) to (vi) were mixed together, and after stirring the mixture in a tumbler mixer, the mixture was granulated by a 45 mm⌀ twin-screw extruder.

From the resultant pellets, the test specimens were injection molded, and the flexural modulus, the dart impact strength, and the spiral flow length were determined.

The results are as follows:

| | |
|---|---|
| Flexural modulus: | 20,000 kg/cm² |
| Dart impact strength (-30°C): | 310 kg·cm |
| Spiral flow length: | 70 cm |

## Claims

1. A reinforced thermoplastic resin composition comprising:
(A) 100 parts by weight of propylene polymer;
(B) 5 to 60 parts by weight of an at least partially graft-modified random copolymer of ethylene and a C₃ to C₁₈ α-olefin, the copolymer having a graft amount of an unsaturated carboxylic acid or a derivative thereof of 0.01% to 10% by weight, a degree of crystallinity according to an X-ray determination of 0 to 45%, and an ethylene content of 30 to 93 mol%;
(C) 5 to 150 parts by weight of an inorganic powdery filler; and
(D) 0.1 to 15 parts by weight of an oxidized polyolefin wax having an oxygen content of 0.1 to 11% by weight.

2. A reinforced thermoplastic resin composition as claimed in claim 1 further comprising (B') 0 to 200 parts by weight, based on 100 parts by weight of the component (A), of an unmodified ethylene-α-olefin random copolymer having a degree of crystallinity according to an X-ray determination of 0 to 45% and an ethylene content of 30 to 93 mol%.

3. A reinforced thermoplastic resin composition comprising:
(A') 100 parts by weight of a mixture of (a) 5% to 95% by weight of propylene polymer (A) and (b) 95% to 5% by weight of polyamide (E);
(B) 5 to 60 parts by weight of an at least partially graft-modified random copolymer of ethylene and a C₃ to C₁₈ α-olefin, the copolymer having a graft amount of an unsaturated carboxylic acid or a derivative thereof of 0.01% to 10% by weight, a degree of crystallinity according to an X-ray determination of 0 to 45%, and an ethylene content of 30 to 93 mol%;
(C) 5 to 150 parts by weight of an inorganic powdery filler; and
(D) 0.1 to 15 parts by weight of an oxidized polyolefin wax having an oxygen content of 0.1 to 11% by weight.

4. A reinforced thermoplastic resin composition as claimed in claim 3 further comprising (B′) 0 to 200 parts by weight, based on 100 parts by weight of the component (A′), of an unmodified ethylene-α-olefin random copolymer having a degree of crystallinity according to an X-ray determination of 0 to 45% and an ethylene content of 30 to 93 mol%.

5. Shaped articles of a composition as claimed in any one of the preceding claims.

## Patentansprüche

1. Verstärke thermoplastische Kunststoffzusammensetzung, welche umfaßt:
(A) 100 Gewichtsteile Propylenpolymer;
(B) 5 bis 60 Gewichtsteile eines wenigstens teilweise pfropf-modifizierten Zufallscopolymers aus Ethylen und einem C₃- bis C₁₈-Olefin, wobei das Copolymer eine aufgepfropfte Menge von 0,01 Gew.-% bis 10 Gew.-% einer ungesättigten Carbonsäure oder eines Derivats davon, gemäß einer Röntgenanalyse einen Kristallinitätsgrad von 0 bis 45% und einen Ethylengehalt von 30 bis 93 Mol% aufweist;
(C) 5 bis 150 Gewichtsteile eines anorganischen pulvrigen Füllmaterials; und
(D) 0,1 bis 15 Gewichtsteile eines oxidierten Polyolefinwachses mit einem Sauerstoffgehalt von 0,1 bis 11 Gew.-%.

2. Verstärkte thermoplastische Kuststoffzusammensetzung nach Anspruch 1, die außerdem 0 bis 200 Gewichtsteile (B'), bezogen auf 100 Gewichtsteile der Komponente (A), eines nicht modifizierten Ethylen-α-Olefinzufallscopolymers mit einem Kristallinitätsgrad gemäß einer Röntgenanalyse von 0 bis 45% und einen Ethylengehalt von 30 bis 93 Mol% umfaßt.

3. Verstärke thermoplastische Kunststoffzusammensetzung, welche umfaßt:
(A') 100 Gewichtsteile eines Gemisches aus (a) 5 Gew.-% bis 95 Gew.-% Propylencopolymer (A) und (b) 95 Gew.-% bis 5 Gew.-% Polyamid (E);
(B) 5 bis 60 Gewichtsteile eines wenigstens teilweise pfropf-modifizierten Zufallscopolymers aus Ethylen und einem C₃- bis C₁₈-Olefin, wobei das Copolymer eine aufgepfropfte Menge von 0,01 Gew.-% bis 10 Gew.-% einer ungesättigten Carbonsäure oder eines Derivats davon, gemäß einer Röntgenanalyse einen Kristallinitätsgrad von 0 bis 45% und einen Ethylengehalt von 30 bis 93 Mol% aufweist;
(C) 5 bis 150 Gewichtsteile eines anorganischen pulvrigen Füllmaterials; und
(D) 0,1 bis 15 Gewichtsteile eines oxidierten Polyolefinwachses mit einem Sauerstoffgehalt von 0,1 bis 11 Gew.-%.

4. Verstärkte thermoplastische Kuststoffzusammensetzung nach Anspruch 3, die außerdem 0 bis 200 Gewichtsteile (B'), bezogen auf 100 Gewichtsteile der Komponente (A'), eines nicht modifizierten Ethylen-α-Olefinzufallscopolymers mit einem Kristallinitätsgrad gemäß einer Röntgenanalyse von 0 bis 45% und einen Ethylengehalt von 30 bis 93 Mol% umfaßt.

5. Geformte Gegenstände einer Zusammensetzung nach einem der vorangegangenen Ansprüche.

## Revendications

1. Composition de résine thermoplastique renforcée comprenant
(A) 100 parties en poids de polymère propylène ;
(B) 5 à 60 parties en poids d'un copolymère aléatoire d'éthylène modifié par greffage au moins en partie et d'une α-oléfine en C3 à C18, le copolymère étant greffé d'une quantité d'acide carboxylique non saturé ou d'un dérivé de celui-ci de 0.01% à 10% en poids, un degré de transparence selon une analyse au rayon X de 0 à 45%, et une teneur en éthylène de 30 à 93 % molaires.
(C) 5 à 150 parties en poids d'un agent de remplissage inorganique pulvérulent ; et
(D) 0,1 à 15 parties en poids d'une cire à base de polyoléfine oxydée ayant une teneur en oxygène de 0,1 à 11% en poids.

2. Composition de résine thermoplastique renforcée selon la revendication 1 comprenant aussi (B') 0 à 200 parties en poids, basées sur 100 parties en poids du composant (A), d'un copolymère aléatoire d'éthylène et d'α-oléfine non modifié ayant un degré de transparence selon une analyse au rayon X de 0 à 45% et une teneur en éthylène de 30 à 93 % molaires.

3. Composition de résine thermoplastique renforcée comprenant :
(A') 100 parties en poids d'un mélange de (a) 5% a 95% en poids de polymère de propylène (A) et (b) 95% à 5% en poids de polyamide (E),
(B) 5 à 60 parties en poids d'un copolymère aléatoire d'éthylène modifié par greffage au moins en partie et d'une a-oléfine en C3 à C18, le copolymère étant greffé d'une quantité d'acide carboxylique non saturé ou d'un dérivé de celui-ci de 0.01% à 10% en poids, un degré de transparence selon une analyse au rayon X de 0 à 45%, et une teneur on éthylène de 30 à 93 % molaires.
(C) 5 à 150 parties en poids d'un agent de remplissage inorganique pulvérulent ; et
(D) 0,1 à 15 parties en poids d'une cire à base de polyoléfine oxydée ayant une teneur en oxygène de 0,1 à 11% en poids.

4. Composition de résine thermoplastique renforcée selon la revendication 3 comprenant aussi (B') 0 à 200 parties en poids, basées sur 100 parties en poids du composant (A'), d'un copolymère aléatoire d'éthylène et d'α-oléfine non modifié ayant un degré de transparence selon une analyse au rayon X de 0 à 45% et une teneur en éthylène de 30 à 93 % molaires.

5. Articles usinés d'une composition selon n'importe laquelle des revendications précédentes.
